Europäisches Patentamt

European Patent Office

Office européen des brevets

(11) Veröffentlichungsnummer: **0 307 755**
**A2**

(12) **EUROPÄISCHE PATENTANMELDUNG**

(21) Anmeldenummer: 88114482.8

(22) Anmeldetag: 05.09.88

(51) Int. Cl.4: **C08F 218/08 , C08F 210/02 , C09D 3/74 , //(C08F218/08, 210:02),(C08F210/02,218:08)**

(30) Priorität: 16.09.87 DE 3731054

(43) Veröffentlichungstag der Anmeldung:
22.03.89 Patentblatt 89/12

(84) Benannte Vertragsstaaten:
BE DE FR GB IT

(71) Anmelder: BAYER AG
Konzernverwaltung RP Patentabteilung
D-5090 Leverkusen 1 Bayerwerk(DE)

(72) Erfinder: Meurer, Kurt Peter, Dr.
Stammheimer Hauptstrasse 39
D-5000 Köln 80(DE)
Erfinder: Sylvester, Gerd, Dr.
An der Steinruetsch 5 a
D-5090 Leverkusen 1(DE)
Erfinder: Ohm, Christian, Dr.
Walter-Flex-Strasse 32
D-5090 Leverkusen 1(DE)
Erfinder: Zimmermann, Hugo, Dr.
Bonner Strasse 51
D-5000 Köln 1(DE)
Erfinder: Bartl, Herbert, Dr.
Eichendorffweg 10
D-5068 Odenthal(DE)
Erfinder: Witte, Josef, Dr.

Verstorben(DE)
Erfinder: Thörmer, Joachim, Dr.
Emil-Nolde-Strasse 39
D-5090 Leverkusen 1(DE)

(54) Verfahren zur Herstellung von Ethylen/Vinylacetat-Copolymerisaten, neue Ethylen/Vinylacetat-Copolymerisate und ihre Verwendung.

(57) Die Verwendung ausgewählter Polymerisationsinitiatoren gestattet die Herstellung von Ethylen/Vinylacetat-Copolymerisaten mit hohem Molekulargewicht und niedrigem Gelgehalt.

EP 0 307 755 A2

**Verfahren zur Herstellung von Ethylen/Vinylacetat-Copolymerisaten, neue Ethylen/Vinylacetat-Copolymerisate und ihre Verwendung**

Die Erfindung betrifft ein Verfahren zur Herstellung von Ethylen/Vinylacetat (EVA)-Copolymerisaten nach dem Lösungsverfahren unter Verwendung spezieller Polymerisationsinitiatoren, neue Ethylen/Vinylacetat-Copolymerisate mit mittlerem und hohem Gehalt an copolymerisiertem Vinylacetat, niedrigem Gelgehalt und dennoch hohem Molekulargewicht und die Verwendung dieser Copolymerisate zur Herstellung von gegebenenfalls vulkanisierten Formkörpern, z.B. Dichtungen, Isolierungen, Schläuchen, Schalldämmaterialien.

Ethylen und Vinylacetat lassen sich bekannterweise in jedem gewünschten Mengenverhältnis bei statistischer Verteilung der Monomeren radikalisch copolymerisieren. Bei niedrigem Vinylacetatgehalt zeigen die Copolymerisate die für Polyethylen bei Raumtemperatur übliche Kristallinität. Ethylen/Vinylacetat-Copolymerisate bis zu einem Gehalt von etwa 30 % copolymerisiertem Vinylacetat haben infolge längerer Ethylensequenzen thermoplastischen Charakter [s. hierzu H. Bartl, J. Peter, "Über Ethylen/ Vinylacetat-Copolymerisate und ihre Vernetzung", Kautschuk und Gummi 14, WT 23 - WT 32 (1961); Winnacker-Küchler, Chem. Technologie, Bd. 6, 4. Auflage, Kap. 2.2.7 "Ethylen-Vinylacetat-Copolymere", Carl Hanser Verlag, München-Wien, 1982, S. 570-572; M. Arne, R.H. Schwaar, Report Nr. 155, Ethylene Copolymers, Process Economics Program, Menlo Park, California, S. 1-40 (1983)]. Ethylen/Vinylacetat-Copolymerisate (s. H. Bucka, R. Nitzsche, H. Onderka, Plaste und Kautschuk 30, (6), 302-305 (1983) mit niedrigem Vinylacetatgehalt lassen sich durch Hochdruckpolymerisation wirtschaftlich herstellen. Nach dem klassischen Masse-Hochdruckpolymerisations-Verfahren kann man Copolymerisate mit niedrigem Vinylacetatgehalt (bis zu maximal 50 Gew.-% Vinylacetat) besonders wirtschaftlich und mit günstigen Eigenschaften herstellen. Die Polymerisation erfolgt im allgemeinen bei Drucken von 1.000 bis 2.000 bar und bei Temperaturen von 150 bis 280° C.

Zunehmender Einbau von Vinylacetat erlaubt eine Senkung von Druck und Temperatur. Bei hohen Vinylacetatgehalten wird es wegen der hohen Temperatur, bei der die Massepolymerisation erfolgt, schwieriger, Copolymerisate mit hohem Molekulargewicht und hoher Mooney-Plastizität herzustellen. Die Herstellung von EVA-Copolymerisaten mit einem VA-Gehalt über 60 Gew.-% und guten Elastomereigenschaften ist nach dem Hochdruckverfahren nicht möglich.

EVA-Copolymerisate mit einem VA-Gehalt über 75 Gew.-% sind als Emulsionscopolymerisate bekannt, jedoch zeigen die löslichen Anteile niedrige Molekulargewichte. Diese Copolymerisate weisen außerdem einen hohen Gelgehalt auf. Sie sind als Elastomermaterial aufgrund ihrer niedrigen Viskosität und schlechten Verarbeitbarkeit nicht brauchbar. Sie werden daher als Emulsion - und nicht als Festkautschuk - verwendet.

In der DE-OS 3 000 009 wird ein Verfahren zur Herstellung von elastomeren Ethylen/Vinylacetat-Copolymerisaten mit hoher Mooney-Viskosität und niedrigem Gelgehalt beschrieben. Es handelt sich um Emulsionscopolymerisate mit einem Gehalt an copolymerisiertem Vinylacetat von 40 bis 70 Gew.-%, die aus wäßrigen Lösungen durch Koagulation eines Ethylen/Vinylacetat-Copolymerisat-Latex gewonnen werden. Die Eigenschaften dieser Ethylen/Vinylacetat-Copolymerisate werden durch nicht vollständig abtrennbare Emulgatorreste bestimmt und machen die Copolymerisate für eine Reihe von Anwendungen unbrauchbar.

EVA-Copolymerisate mit einem Vinylacetatgehalt von mehr als 30 Gew.-% können auch nach einem Lösungspolymerisations-Verfahren bei mittleren Drucken hergestellt werden. Als Lösungsmittel verwendet man beispielsweise tert.-Butanol oder Gemische aus tert.-Butanol, Methanol und Kohlenwasserstoffen, in denen die Polymerisate auch während des Polymerisationsprozesses in Lösung bleiben (s. US-PS 2 396 785, DE-AS 1 126 614 und 1 126 613, FR-PS 1 189 387 und US-PS 2 947 735 sowie GB-PS 807 112, 843 974 sowie FR-PS 1 238 589 und 1 225 704, DE-OS 3 323 531).

So liefert das Verfahren nach der DE-AS 1 495 767 durch eine Lösungspolymerisation von Ethylen und Vinylacetat in tert.-Butanol kautschukartige Polymerisate, die einen Gehalt an copolymerisiertem Vinylacetat von etwa 40 bis 75 Gew.-% besitzen.

Das Lösungs-Polymerisationsverfahren wird in der Regel in einer Kaskade von drei bis zehn Reaktoren in tert.-Butanol als Lösungsmittels bei Temperaturen von 50 bis 130° C und einem Druck von 50 bis 400 bar in Anwesenheit radikalbildender Substanzen, wie organischen Peroxiden oder Azoverbindungen, als Polymerisationsinitiatoren durchgeführt.

Überraschenderweise wurde jetzt gefunden, daß durch die Verwendung spezieller Polymerisationsinitiatoren und Einhaltung bestimmter Temperaturen in den einzelnen Reaktoren, durch die der Initiatorzerfall

EP 0 307 755 A2

festgelegt wird. EVA-Lösungscopolymerisate mit äußerst geringem Gelgehalt, hoher Mooney-Plastizität und hohem Molekulargewicht zugänglich werden. Die erfindungsgemäß hergestellten Produkte zeichnen sich u.a. durch geringe Klebrigkeit sowie erhöhte Festigkeit im rohen oder vulkanisierten Zustand aus.

Gegenstand der Erfindung ist ein Verfahren zur Herstellung von Ethylen/Vinylacetat-Copolymerisaten mit einem Gehalt an copolymerisierten Vinylacetateinheiten von 40 bis 98 Gew.-% und einem als Gewichtsmittel bestimmten Molekulargewicht $\overline{M}_w$ von mindestens 150.000 nach dem Lösungs verfahren in Gegenwart von 0,02 bis 1,5 Gew.-%, bezogen auf eingesetzte copolymerisierbare Monomere, Polymerisationsinitiator, dadurch gekennzeichnet, daß der Polymerisationsinitiator eine Zerfallshalbwertzeit bei 70°C von 30 Minuten bis 4 Stunden besitzt und die Polymerisationstemperaturen in den Reaktoren so gewählt werden, daß in der ersten Hälfte des Kaskadenvolumens mehr als 50% des Initiators zerfallen.

Bevorzugte Polymerisationsinitiatoren mit der anspruchsgemäßen Zerfallshalbwertzeit sind z.B. tert.-$C_4$-$C_{10}$-Alkylperpivalate. Besonders bevorzugte Alkylperpivalate sind tert.-Butyl- und tert.-Amylperpivalat.

Weiterer Gegenstand der Erfindung sind Ethylen/Vinylacetat-Copolymerisate mit einem Gehalt an copolymerisierten Vinylacetatresten von über 75 bis 98, vorzugsweise von 80 bis 95, Gew.-%, einem Gelgehalt von unter 0,5 Gew.-%, einem als Gewichtsmittel bestimmten Molekulargewicht $\overline{M}_w$ von 150,000 bis 1.000.000 vorzugsweise von 200.000 bis 500.000.

Weiterer Gegenstand der Erfindung ist schließlich die Verwendung dieser Copolymerisate zur Herstellung von gegebenenfalls vulkanisierten Formkörpern, Dichtungen, Isolierungen, Schläuchen, Schalldämmaterialien, Kabelmänteln und Kabelleitlagen.

Die erfindungsgemäß hergestellten Copolymerisate besitzen Mooney-Plastizitäten (nach DIN 53 523, ML-4) von 20 bis 60, vorzugsweise 20 bis 50.

Die molekularen Strukturparameter, insbesondere das mittlere Molekulargewicht $\overline{M}_w$, werden durch Gelpermeationschromatographie, gekoppelt mit Viskosimetrie und Trübungstitration, wie folgt ermittelt:

Die Proben werden mit einer Konzentration von 10 g/l in $CH_2Cl_2$ angesetzt und nach 24 Stunden bei Raumtemperatur ultrazentrifugiert (1 Stunde bei 20.000 min$^{-1}$). Das abgetrennte Sediment wird bei 60°C im Vakuum getrocknet und ausgewogen ($\gamma_{UZ}$). Von der Sollösung wird zusätzlich mit einem automatisierten Ubbelohde-Kapilarviskosimeter der Staudinger-Index ($[\eta]_{Sol}$) in $CH_2Cl_2$ bei 25°C bestimmt.

Die gelchromatographische Trennung erfolgt an 8 hintereinander geschalteten Styragel®-Säulen (Porengröße $10^2/10^2/10^3/10^3/10^4/10^4/10^5/10^6$ nm; Gesamtlänge 976 cm). 2,0 ml der mit $CH_2Cl_2$ auf c = 2 g/l verdünnten Sollösung werden nach Filtration durch einen Membranfilter mit einem Porendurchmesser von 1,2 μm aufgegeben und mit $CH_2Cl_2$ (Flußgeschwindigkeit 0,5 ml/min) eluiert. Als konzentrationsproportionaler Detektor dient ein Refraktometer. Zum spezifischen Nachweis der Acetatbande wird eine IR-Filterphotometer bei λ = 5,76 (λ = 1.736 nm) eingesetzt.

Gekoppelt an die gelchromatographische Trennung wird mit jeweils 5 ml des Eluates - entsprechend einem count im Gelchromatogramm - automatisch eine Viskositätsmessung in einem modifizierten Ubbelohde-Viskosimeter und danach eine Trübungstitration durchgeführt. Für die Titration wird das Eluat in eine Küvette geleitet, die sich in einem geschwärzten Metallgehäuse befindet, und mit Hilfe einer Schlauchpumpe das Fällungsmittel (Methanol) kontinuierlich mit 2 ml/min. zugegeben. Insgesamt werden 15 ml Fällungsmittel zugegeben. Ein Rührer (8.000 U/min) sorgt für eine schnelle Durchmischung der Komponenten. Die Küvette wird mit einer Lichtemissionsdiode beleuchtet. Die Streulichtintensität des Lösungs-/Fällungsmittel-Gemisches wird mit einer optischen Einrichtung unter einem Winkel von 20°C zum Primärstrahl gemessen und in Abhängigkeit der zudosierten Fällungsmittelmenge registriert.

Während einer gelchromatographischen Untersuchung fallen 75 derartige Eluatfraktionen an, von denen ca. 20 bis 30 die aufgetrennte Probe enthalten. Die Berechnung der Molekulargewichtsverteilung aus den refraktometrischen und viskosimetrischen Daten erfolgt anhand bekannter Konstanten mit Hilfe einer universellen Eichkurve nach der Methode von Benoit (H. Benoit, P. Rempp, Z. Grubisic, J. Polym. Sci., Polym. Lett. Ed. 3, 77 (1965); Polystyrol-Standards im Molekulargewichtsbereich von 600 bis 10 000 000; Aufstellung der Eichkurve gemäß der Gleichung

$$\log ([\eta] \bullet M) = f (V_E)$$

$[\eta]$ = Staudinger-Index, bestimmt in Methylenchlorid bei 25°C in einem Ubbelohde-Kapilarviscosimeter

M = Molekulargewicht

$V_E$ = Elutionsvolumen in 5 ml-Einheiten).

Die erfindungsgemäß hergestellten Copolymerisate besitzen vorzugsweise eine molekulare Uneinheitlichkeit

3

$$\frac{\overline{M}_w}{\overline{M}_n} - 1$$

von 1 bis 15.

Der Gelgehalt der erfindungsgemäßen Copolymerisate wird durch 24-stündige Extraktion mit Toluol im Soxhlet-Aufsatz als der Prozentsatz des unlöslichen Anteils bestimmt.

Das erfindungsgemäße Verfahren wird kontinuierlich in hintereinandergeschalteten Reaktionsbehältern (Kaskade) durchgeführt, wobei man vorzugsweise mindestens drei Reaktoren verwendet.

Die Temperaturen betragen 40° C bis 120° C, vorzugsweise 50° C bis 90° C, der Druck 100 bis 400 bar. Die Lösungsmittelmenge beträgt 10 bis 300, vorzugsweise 25 bis 200 Gew.-%, bezogen auf eingesetztes Vinylacetat.

Der Umsatz beträgt im allgemeinen 25 bis 90, vorzugsweise 35 bis 80, Gew.-%, bezogen auf eingesetztes Vinylacetat.

Die nach dem erfindungsgemäßen Verfahren hergestellten Polymerisate sind gelfrei und haben niedrige Einfriertemperaturen. Sie besitzen eine erhöhte Zugfestigkeit, bessere Verarbeitbarkeit und Spritzbarkeit bei einer geringeren Klebeneigung der Mischungen während der Verarbeitung. Die Granulate der Polymerisate zeichnen sich durch verbesserte Rieselfähigkeit aus.

Bei der Vulkanisation zeigen die erfindungsgemäßen Polymerisate geringere Blasenbildung und bessere Entformbarkeit in der Wärme. Die Vulkanisate zeichnen sich durch eine höhere Zugfestigkeit und Bruchdehnung sowie günstigere Spannungswerte aus. Insbesondere Copolymerisate mit einem Vinylacetatgehalt von 75 bis 98 Gew.-% eignen sich zur Herstellung von besonders flammwidrigen und ölbeständigen Artikeln.

Sie können zur Herstellung von Überzügen, z.B. auf Kabeln, als Folien, Beschichtungsmaterial sowie zur Modifikation anderer Kunststoffe, beispielsweise Celluloseester oder Polyvinylchlorid, verwendet werden. Weiterhin können insbesondere die Ethylen/Vinylacetat-Copolymerisate mit einem VA-Gehalt über 75 Gew.-% als Blendkomponenten, z.B. in Abmischungen von Polyolefinen oder Polyurethanen, dienen. Die Prozentangaben der nachfolgenden Beispiele beziehen sich auf das Gewicht; Teile sind Gewichtsteile.

## Beispiele

### Beispiel 1

Eine Kaskade, bestehend aus sechs hintereinander geschalteten Hochdruck-Rührautoklaven von jeweils einem Fassungsvermögen von 3 bis 6 m² wird kontinuierlich beschickt mit 730 kg/h Ethylen, mit einem Gemisch (2.600 l/h) bestehend aus einem Teil tert.-Butanol und einem Teil Vinylacetat sowie mit einer Initiatorlösung (156 l/h) bestehend aus 780 kg Vinylacetat, 780 kg tert.-Butanol und 12 kg tert.-Butylperpivalat. Dieser Massenstrom durchläuft alle Autoklaven. Die Reaktorinnentemperaturen betragen 60, 72, 70, 71, 74, 75° C. Der Betriebsdruck wird auf 300 bar eingestellt. Nach Erreichen des Gleichgewichtes werden aus den einzelnen Reaktoren über Schleusen Proben gezogen. Unverbrauchtes Ethylen wird vorsichtig entspannt und abgelassen. Die entgasten Proben enthalten 10 bis 48 % Feststoff. Der Vinylacetat-Gehalt des Polymerisats beträgt 70 %. Die Mooney-Plastizität des Rohmaterials beträgt 29 ML-4, $\overline{M}_w$ = 360.000; $\overline{M}_n$ = 31.000.

### Beispiel 2

Beispiel 1 wird wiederholt mit dem Unterschied, daß die Autoklavenkaskade kontinuierlich mit 910 kg/h Ethylen, mit einem Gemisch (2.600 l/h) bestehend aus einem Teil tert.-Butanol und einem Teil Vinylacetat, sowie mit einer Initiatorlösung (156 l/h) bestehend aus 468 kg Vinylacetat, 832 kg tert.-Butanol und 11,7 kg tert.-Butylperpivalat beschickt wird. Die Reaktorinnentemperaturen betragen 70 bis 80° C. Der Vinylacetatgehalt des Polymerisats beträgt 52 %, die Mooney-Plastizität 28, $\overline{M}_w$ = 405.000, $\overline{M}_n$ = 36.000.

Beispiel 3

Beispiel 1 wird wiederholt mit dem Unterschied, daß die Autoklavenkaskade kontinuierlich mit 260 kg/h Ethylen, mit einem Gemisch (2.600 l/h) bestehend aus einem Teil tert.-Butanol und einem Teil Vinylacetat, sowie mit einer Initiatorlösung (156 l/h) bestehend aus 780 kg Vinylacetat, 780 kg tert.-Butanol und 11,7 kg tert.-Butylperpivalat beschickt wird. Die Reaktorinnentemperaturen betragen 64 bis 80°C. Der Vinylacetatgehalt des Polymerisats beträgt 85 %, die Mooney-Plastizität beträgt 28, $\overline{M}_w$ = 325.000, $\overline{M}_n$ = 28.000.

Beispiel 4

Beispiel 1 wird wiederholt mit dem Unterschied, daß die Autoklavenkaskade kontinuierlich mit 120 kg/h Ethylen, mit einem Gemisch (2.600 l/h) bestehend aus einem Teil Vinylacetat und einem Teil tert.-Butanol, sowie mit einer Initiatorlösung (156 l/h) bestehend aus 780 kg Vinylacetat, 750 kg tert.-Butanol und 11,7 kg tert.-Butylperpivalat beschickt wird. Die Reaktorinnentemperaturen betragen 64 bis 80°C. Der Vinylacetatgehalt des Polymerisats beträgt 95 %. Die Mooney-Plastizität des Polymerisats beträgt 27, $\overline{M}_w$ = 420 000, $\overline{M}_n$ = 38 000.

Die Copolymerisate, die in den folgenden Beispielen Anwendung finden, sind in Tabelle 1 spezifiziert, wobei die erfindungsgemäßen Copolymerisate mit EVA-Copolymer I, II, III bezeichnet sind.

Tabelle 1

| EVA-Coplymer | Vinylacetatgehalt (Gew.-%) | Dichte (g/cm³) | Mooney-Viskosität (ML 1 + 4/100°C) |
|---|---|---|---|
| I | 43 | 0,98 | 28 |
| II | 45 | 0,99 | 28 |
| III | 50 | 1,00 | 27 |
| ®Levapren 400 | 40 | 0,98 | 19 |
| ®Levapren 450 | 45 | 0,99 | 19 |
| ®Levapren 500 | 50 | 1,00 | 18 |

Die in Tabelle 1 aufgelisteten Polymeren werden in einem Laborkneter zusammen mit folgenden Bestandteilen gemischt:

EVA-Copolymer     100 Teile
Stearinsäure     1 Teil
®Vulkanox DDA     1 Teil
Ruß Corax N 550     40 Teile
®Rhenofit TAC/S     3,5 Teile
®Perkadox 14/40     4 Teile

®Vulkanox DDA ist die Handelsbezeichnung eines Polymeralterungsschutzmittel auf Basis eines styrolisierten Diphenylamins. ®Rhenofit TAC/S ist die Handelsbezeichnung für ein 70 gew.-%iges Triallylcyanurat auf Kieselsäure und dient als Vernetzungsaktivator. ®Perkadox 14/40 ist die Handelsbezeichnung für ein Granulat, das 40 Gew.-% Bis-(tert.-butylperoxy-isopropyl)-benzol enthält. ®Levapren ist die Handelsbezeichnung für Ethylen/Vinylacetat-Copolymerisate der BAYER AG.

Die Mischungen werden zu 2 mm starken Platten in der Presse (170°C/20 min) unter Druck (200 bar) verarbeitet. Die mechanischen Eigenschaften wurden gemäß DN 53 504 (Zugversuch) geprüft. Die Prüfkörper (Normring 1) wurden aus den Pressplatten ausgestanzt.

Die Prüfergebnisse sind in Tabelle 2 zusammengefaßt.

Die Beispiele zeigen, daß die Vulkanisate auf Basis der erfindungsgemäßen, neuen EVA-Copolymerisate (vergl. Proben 1, 3, 5) deutlich höhere Zugfestigkeit und Spannungswerte haben als die Vulkanisate auf Basis ®Levapren (vergl. Proben 2, 4, 6). Die Bruchdehnung wird kaum beeinflußt.

Tabelle 2

| Probe | 1 | 2 | 3 | 4 | 5 | 6 |
|---|---|---|---|---|---|---|
| EVA-Copolymer I | 100 | - | - | - | - | - |
| ®Levapren 400 | - | 100 | - | - | - | - |
| EVA-Copolymere II | - | - | 100 | - | - | - |
| ®Levapren 450 | - | - | - | 100 | - | - |
| EVA-Copolymer III | - | - | - | - | 100 | - |
| ®Levapren500 | - | - | - | - | - | 100 |
| Stearinsäure | 1 | 1 | 1 | 1 | 1 | 1 |
| ®Vulkanox DDA | 1 | 1 | 1 | 1 | 1 | 1 |
| Ruß Corax N550 | 40 | 40 | 40 | 40 | 40 | 40 |
| ®Rhenofit TAC/S | 3,5 | 3,5 | 3,5 | 3,5 | 3,5 | 3,5 |
| ®Perkadox 14/40 | 4 | 4 | 4 | 4 | 4 | 4 |
| Zugfestigkeit [MPa] | 17,0 | 14,6 | 16,5 | 13,0 | 16,3 | 13,2 |
| Spannungswert [MPa] bei 100 % Dehnung | 7,8 | 6,7 | 7,2 | 6,0 | 6,9 | 5,6 |
| Spannungswert [MPa] bei 150 % Dehnung | 14,4 | 12,1 | 13,8 | 11,4 | 13,4 | 11,2 |
| Bruchdehnung [%] | 190 | 194 | 191 | 182 | 195 | 187 |

Weitere erfindungsgemäße Copolymere sind in Tabelle 3 aufgelistet.

Tabelle 3

| EVA-Copolymer | Vinylacetatgehalt* (Gew.-%) | Mooney-Viskosität ((ML1 + 4/100 $^{\circ}$C) |
|---|---|---|
| IV | 70 | 25 |
| V | 80 | 21 |
| VI | 88 | 28 |

* Bestimmung des Vinylacetatgehaltes in Ethylen/Vinylacetat-Copolymerisaten IR-spektroskopisch, wie in "Materiale Plastice" 13, 2, 1976 beschrieben.

Die in Tabelle 3 aufgeführten Polymeren werden in einem Laborkneter zu Mischungen verarbeitet. Die Mischungsrezeptur ist so, wie sie z.B. bei der Herstellung halogenfreier, flammfester Kabelmäntel üblicherweise eingesetzt werden kann.

EVA-Copolymer     100 Teile
®Ucarsil RC-1     2 Teile
Zinkborat     10 Teile
Zinkstearat     1 Teil
®Rhenogran P50     3 Teile
®Apyral B 120     190 Teile
®Ingrasplast SRL     6 Teile
®Vulkanox DDA     1 Teil
®Aktivator OC     0,5 Teile
®Perkadox 14/40     6 Teile

®Ucrasil RC-1 ist die Handelsbezeichnung für ein Vinylsilan.
®Rhenogran P50 ist die Handelsbezeichnung für ein 50 gew.-%iges Polycarbodiimid, phlegmatisiert mit EVA, und dient als Hydrolyseschutzmittel.
®Apyral B120 ist die Handelsbezeichnung für ein Aluminiumhydroxid (Aluminiumoxid-hydrat). ®Ingraplast SRL ist die Handelsbezeichnung für eine paraffinisches Mineralöl. ®Aktivator OC ist die Handelsbezeichnung für ein Triallylcyanurat und dient als Vernetzungsaktivator.
Die Mischungen wurden in der Presse (5 min/100 $^{\circ}$C) zu Platten vorgepreßt und danach im CV-Kessel vulkanisiert (180sec/200 $^{\circ}$C plus 3 min. Nachdruck). Die mechanischen Eigenschaften wurden gemäß DIN 53 504 (Zugversuch) geprüft. Der Sauerstoffindex LOI wurde gemäß ASTM D2863 geprüft. Die Prüfkörper wurden aus den Pressplatten ausgestanzt.

Die Prüfergebnisse sind in Tabelle 4 zusammengefaßt.

Die Beispiele zeigen, daß die neuen, sehr hoch Vinylacetathaltigen EVA-Copolymerisate im geprüften Vulkanisat bei guten mechanischen Eigenschaften über ausgezeichnete Sauerstoffindices (LOI) verfügen, und darüberhinaus auch in der Ölbeständigkeit optimiert sind. LOI-Wert und Ölbeständigkeit korrelieren mit dem Vinylacetatgehalt (vergl. Proben 7, 8, 9).

Tabelle 4

| Probennr. | 7 | 8 | 9 |
|---|---|---|---|
| EVA-Copolymer IV | 100 | - | - |
| EVA-Copolymer V | - | 100 | - |
| EVA-Copolymer VI | - | - | 100 |
| ®Rhenogram P50 | 3 | 3 | 3 |
| ®Apyral B 120 | 190 | 190 | 190 |
| ®Ucrasil RC-1 | 2 | 2 | 2 |
| Zinkborat | 10 | 10 | 10 |
| Zinkstearat | 1 | 1 | 1 |
| ®Ingroplast SRL | 6 | 6 | 6 |
| ®Vulkanox DDA | 1 | 1 | 1 |
| ®Aktivator OC | 0,5 | 0,5 | 0,5 |
| ®Perkadox 14/40 | 6 | 6 | 6 |
| Zugfestigkeit [MPa] | 12,5 | 11,3 | 11,2 |
| Spannungswert [MPa] bei 100 % Dehnung | 8,8 | 8,6 | 10,4 |
| Spannungswert [MPa] bei 200 % Dehnung | 12,0 | - | - |
| Bruchdehnung [%] | 210 | 190 | 130 |
| LOI [%] | 45 | 47 | 49 |
| Lagerung in ASTM-Öl III; 24 h/100°C | | | |
| Volumenquellung [%] | 14 | 7 | 2 |
| Lagerung in Dieselöl; 7d/100°C | | | |
| LOI [%] | 30 | - | 35 |

**Ansprüche**

1. Verfahren zur Herstellung von Ethylen/Vinylacetat-Copolymerisaten mit einem Gehalt an copolymerisierten Vinylacetateinheiten von 40 bis 98 Gew.-% und einem als Gewichtsmittel bestimmten Molekulargewicht $\overline{M}_w$ von mindestens 150.000 durch Lösungspolymerisation in tert.-Butanol in Gegenwart von 0,02 bis 1,5 Gew.-% Polymerisationsinitiator, bezogen auf eingesetzte Copolymerisierbare Monomere, dadurch gekennzeichnet, daß der Polymerisationsinitiator eine Zerfallshalbwertszeit bei 70°C von 30 Minuten bis 4 Stunden besitzt und die Polymerisationstemperaturen in den Reaktoren so gewählt werden, daß in der ersten Hälfte des Kaskadenvolumens mindestens 50% des Initiators zerfallen.

2. Verfahren nach Anspruch 1, dadurch gekennzeichnet, daß der Polymerisationsinitiator ein tert.-$C_4$-$C_{10}$-Alkylperpivalat ist.

3. Verfahren nach Anspruch 1, dadurch gekennzeichnet, daß der Polymerisationsinitiator aus der Gruppe bestehend aus tert.-Butylperpivalat und tert.-Amylperpivalat ausgewählt ist.

4. Ethylen/Vinylacetat-Copolymerisate mit einem Gehalt an copolymerisierten Vinylacetateinheiten von 75 bis 98 Gew.-%, einem Gelgehalt von unter 0,5 Gew.-% und einem als Gewichtsmittel bestimmten Molekulargewicht $\overline{M}_w$ von über 150.000.

5. Copolymerisate nach Anspruch 4 mit einem Gehalt an copolymerisiertem Vinylacetat von 80 bis 95 Gew.-%.

6. Copolymerisate nach Ansprüchen 4 und 5 mit einem Molekulargewicht $\overline{M}_w$ von 150.000 bis 1.000.000.

7. Copolymerisate nach Ansprüchen 4 und 5 mit einem Molekulargewicht $\overline{M}_w$ von 200.000 bis 500.000.

8. Verwendung der Copolymerisate nach Ansprüchen 4 bis 7 zur Herstellung von Formkörpern.

9. Verwendung der Copolymerisate nach Ansprüchen 4 bis 7 zur Herstellung von Dichtungen, Isolierungen, Kabelmänteln, Kabelleitlagen, Schläuchen, Schalldämmaterialien.

10. Verwendung der Copolymerisate nach Ansprüche 4 bis 7 zur Herstellung von Vulkanisaten.